# EUROPÄISCHE PATENTSCHRIFT

(11) **EP 2 204 788 B1**
(45) Veröffentlichungstag und Bekanntmachung des Hinweises auf die Patenterteilung: **20.02.2013**
(21) Anmeldenummer: 08022537.8
(22) Anmeldetag: 31.12.2008
(51) Int. Cl.: G08G 1/017, G08G 1/04, G08G 1/052

(54) **Verfahren und Vorrichtung zum Erfassen der Bewegung von Fahrzeugen**
Method and device for measuring the movement of vehicles
Procédé et dispositif destinés à enregistrer les mouvements de véhicules

(43) Veröffentlichungstag der Anmeldung: 07.07.2010
(73) Patentinhaber: VITRONIC Dr.-Ing. Stein Bildverarbeitungssysteme GmbH, 65189 Wiesbaden (DE)
(72) Erfinder: Schmundt, Dominik, 69126 Heidelberg (DE); Dieter, Jochen, 65189 Wiesbaden (DE); Koy-Oberthür, Reinhard, 65527 Niedernhausen (DE)
(74) Vertreter: Müller, Thomas Michael

(56) Entgegenhaltungen:
- US-A1- 2005 285 738
- US-B1- 6 304 321
- GILBERT R K ET AL: "MEASUREMENT OF VEHICLE TRAJECTORIES USING 3-D LASER RADAR" INTELLIGENT VEHICLE HIGHWAY SYSTEMS. BOSTON, NOV. 2 - 4, 1994; [INTELLIGENT VEHICLE HIGHWAY SYSTEMS], BELLINGHAM, SPIE, US, 1. Januar 1994 (1994-01-01), Seiten 30-41, XP000689121 ISBN: 978-0-8194-1677-3
- SCHWARTZ W C ED - BECHERER R J (ED): "LASER VEHICLE DETECTOR/CLASSIFIER" INTELLIGENT VEHICLE HIGHWAY SYSTEMS. BOSTON, NOV. 2 - 4, 1994; [INTELLIGENT VEHICLE HIGHWAY SYSTEMS], BELLINGHAM, SPIE, US, 1. Januar 1994 (1994-01-01), Seiten 81-87, XP000689125 ISBN: 978-0-8194-1677-3

## Beschreibung

Die Erfindung betrifft ein Verfahren sowie eine Vorrichtung zum Erfassen der Bewegung von Fahrzeugen mittels eines mehrfach flächenüberwachenden Sensorsystems.

Ein derartiges Verfahren und eine derartige Vorrichtung sind aus der DE 101 48 289 A1 bekannt. Hierbei wird ein Sensorsystem mit einem flächenüberwachenden Lasermesssensor verwendet, wobei der Lasermesssensor eine fächerförmige Messebene aufspannt, die in etwa entlang der Fahrbahnrichtung mit der Fahrbahn eine Schnittlinie bildet. Die Messebene ist zudem zur Fahrbahnebene geneigt. Hierdurch kann ein Fahrzeug nach Eintritt in die vom Lasermesssensor gebildete Messebene verfolgt werden, bis das Fahrzeug wieder aus der Messebene austritt. Hierbei bewegt sich das Fahrzeug kontinuierlich in der Messebene, so dass auf Basis der ermittelten Messdaten die Position, die Geschwindigkeit und die Geometrie des Fahrzeugs abgeschätzt werden kann. Nach Austritt aus der Messebene durchfährt das Fahrzeug ein Portal, an dem neben dem erstgenannten Lasermesssensor ein weiterer Lasermesssensor vorgesehen ist, der eine Messebene quer zur Fahrbahnrichtung aufspannt, wobei die Messebene vertikal in etwa senkrecht zur Fahrbahn ausgerichtet ist. Dieser Lasermesssensor erfasst dann die genaue Kontur des Fahrzeugs, um dieses klassifizieren zu können und um zum Beispiel mautpflichtige Fahrzeuge von nicht mautpflichtigen Fahrzeugen unterscheiden zu können.

Nachteilig ist jedoch, dass kleine Fahrzeuge zwischen den Messebenen der einzelnen Lasermesssensoren fahren können, ohne oder nur unzureichend von den Lasermesssensoren erfasst zu werden.

Die US 2005/0285738 A1 offenbart ein Verfahren zum Erfassen von Fahrzeugen mittels Laserstrahlen, die die Entfernung einzelner Messpunkte in mehreren Messpunkten ermitteln. Hierzu wird ein Laserstrahl in mehrere einzelne Laserstrahlen aufgeteilt. Der Laserstrahl wird durch einen "Splitter" auf zwei Lichtwellenleiter aufgeteilt. Die beiden Laserstrahlen werden dann durch Löcher in einen Spiegel geführt und durch eine Linse, bis sie die Straßenoberfläche erreichen.

Die US 6 304 321 B1 offenbart ein Verfahren zur Klassifizierung und zur Erstellung eines 3-D-Profils von Fahrzeugen mittels eines flächenüberwachenden Sensorsystems, das die Entfernung einzelner Messpunkte in mindestens zwei Messebenen ermittelt. Die beiden Messebenen sind in Abstand zueinander angeordnet und schneiden die Fahrbahn quer zur Fahrbahnrichtung. Es wird das Einfahren eines Fahrzeugs in die beiden Messebenen detektiert und hieraus die Geschwindigkeit ermittelt. Ferner dienen die Messebenen dazu, ein 3-dimensionales Profil eines durchfahrenden Fahrzeugs zu erstellen. Hierdurch lassen sich die Fahrzeuge in unterschiedliche Fahrzeugklassen aufteilen, wie z. B. Pkw, Lkw und Motorrad.

Die Veröffentlichung von Gilbert, R. K. et al. "Measurement of Vehicle Trajectories using 3-D Laser Radar" offenbart ein Verfahren zur Erfassung der Bewegung von Fahrzeugen mittels mehrerer raumüberwachender Sensorsysteme, die die Entfernung einzelner Messpunkte in mindestens einem Messraum ermitteln. Die 3-dimensionalen Messräume sind auf eine Fahrbahn gerichtet, wobei das Ein- und Ausfahren eines Fahrzeugs in den Messraum detektiert wird. Darüber hinaus wird ein Fahrzeug, sobald es in einen Messraum eingefahren ist, verfolgt, bis es wieder aus dem Messraum ausgefahren ist. Durch das Verfolgen des Fahrzeugs lässt sich die Fahrtrichtung und die Geschwindigkeit des Fahrzeugs ermitteln und hieraus Trajektoriedaten erzeugen.

Aufgabe der vorliegenden Erfindung ist es daher, ein engmaschigeres und flexibles Messverfahren und eine entsprechende Vorrichtung bereitzustellen.

Die Aufgabe wird erfindungsgemäß durch ein Verfahren zum Erfassen der Bewegung von Fahrzeugen mittels eines flächenüberwachenden Sensorsystems, das die Entfernung einzelner Messpunkte mindestens zwei Messebenen ermittelt, gelöst, wobei die Messebenen eine Fahrbahn in Abstand zueinander quer zur Fahrbahnrichtung schneiden, wobei durch Detektieren des Einfahrens eines Fahrzeugs in die Messebenen- und/oder des Ausfahrens des Fahrzeugs aus den Messebenen die Fahrtrichtung und die Geschwindigkeit des Fahrzeugs ermittelt wird.

Die Messebenen sind quer zur Fahrbahnrichtung angeordnet, d.h. dass jeweils die Schnittlinie einer Messebene mit der Fahrbahn in einem Winkel zur Fahrbahnrichtung verläuft und somit von der Fahrbahnrichtung abweicht. Die Schnittlinien der Messebenen mit der Fahrbahn können hierbei senkrecht zur Fahrbahnrichtung verlaufen. Durch die Anordnung der Messebenen quer zur Fahrbahnrichtung ist sichergestellt, dass jedes Fahrzeug die Messebenen durchfahren muss. Somit ist gewährleistet, dass auch kleine Fahrzeuge detektiert werden. Dadurch, dass mindestens zwei Messebenen derart angeordnet sind, dass sie beabstandet zueinander die Fahrbahn schneiden und somit in Fahrbahnrichtung betrachtet hintereinander angeordnet sind, läßt sich die Geschwindigkeit durch Ermitteln des Zeitpunktes zum Beispiel des Einfahrens in die beiden Messebenen einfach ermitteln. Es werden darüber hinaus auch die Positionen ermittelt, bei denen das Fahrzeug in die jeweiligen Messebenen einfährt, so dass beim Durchfahren von mindestens zwei Messebenen auch auf die Fahrtrichtung geschlossen werden kann.

In konkreter Ausgestaltung ist vorgesehen, dass das Einfahren eines Fahrzeugs in die erste Messebene und/oder das Ausfahren des Fahrzeugs aus der ersten Messebene mittels des flächenüberwachenden Sensorsystems detektiert wird, dass das Einfahren des Fahrzeugs in die zweite Messebene und/oder das Ausfahren des Fahrzeugs aus der zweiten Messebene mittels des flächenüberwachenden Sensorsystems detektiert wird und dass hieraus die Fahrtrichtung und die Geschwindigkeit des Fahrzeugs auf Basis der Messdaten ermittelt wird und daraus Trajektoriedaten für die weitere Verarbeitung erzeugt werden. Die erste und zweite Messebene, welche für die Ermittlung der Fahrtrichtung und Geschwindigkeit benutzt werden, können prinzipiell beliebige Messebenen aus der Gesamtzahl der Messebenen sein. Vorzugsweise werden jedoch die Messebenen verwendet, die vom Kraftfahrzeug zuerst durchfahren werden.

Beim Detektieren des Einfahrens in eine der Messebenen und/oder des Ausfahrens aus einer der Messebenen werden der jeweilige Zeitpunkt und der jeweilige Ort des Einfahrens und/oder des Ausfahrens ermittelt und als Messdaten zum Beispiel einer Recheneinheit zur Verfügung gestellt.

Im einzelnen ist vorzugsweise vorgesehen, dass das Einfahren eines Fahrzeugs in die erste Messebene detektiert wird und erste Einfahrdaten an eine zentrale Steuereinheit gesendet werden, dass das Verlassen des Fahrzeugs aus der ersten Messebene detektiert wird und erste Ausfahrdaten an die zentrale Steuereinheit gesendet werden, dass das Einfahren des Fahrzeugs in die zweite Messebene detektiert wird und zweite Einfahrdaten an eine zentrale Steuereinheit gesendet werden, dass das Verlassen des Fahrzeugs aus der zweiten Messebene detektiert wird und zweite Ausfahrdaten an die zentrale Steuereinheit gesendet werden und dass die Trajektoriedaten des Fahrzeugs durch Abschätzen der Geschwindigkeit und der Fahrtrichtung des Fahrzeugs auf Basis der Einfahrdaten und Ausfahrdaten ermittelt werden. Wenn mehr als zwei Messebenen vorgesehen sind, werden entsprechend mehr Einfahrdaten und Ausfahrdaten ermittelt. Die zeitliche Abfolge kann durchaus unterschiedlich sein. Die Messebenen können so weit voneinander beabstandet sein, dass ein Fahrzeug aus der ersten Messebene ausfährt und im Anschluss daran in die zweite Messebene einfährt. Wenn die Messebenen eng zueinander angeordnet sind, ist es jedoch auch möglich, dass sich ein Fahrzeug immer in mindestens einer der Messebenen befindet und erst die erste Messebene verlässt, wenn es bereits vorher in die zweite Messebene eingefahren ist. Prinzipiell können zur Ermittlung der Fahrtrichtung und der Geschwindigkeit beliebige Kombinationen der vorhandenen Messebenen herangezogen werden.

Um Fahrzeuge eindeutig klassifizieren zu können, ist vorzusehen, dass Geometriedaten des Fahrzeugs in einer konturerfassenden Messebene des Sensorsystems erfasst werden und dass die Geometriedaten den Trajektoriedaten des Fahrzeugs zugeordnet werden. Durch die Erfassung der Geometrie, insbesondere der Kontur des Fahrzeugs, kann z.B. ein mautpflichtiges Fahrzeug von einem nicht mautpflichtigen Fahrzeug unterschieden werden. Durch die Zuordnung der Geometriedaten zu den Trajektoriedaten wird je Fahrzeug ein Datensatz erzeugt, wobei die zeitlich nacheinander ermittelten Daten, nämlich Trajektoriedaten und Geometriedaten, einander zugeordnet werden. Hierbei kann die konturerfassende Messebene durch eine der Messebenen des Sensorsystems gebildet sein. In der konturerfassenden Messebene können zudem auch Trajektoriedaten erfasst werden.

Das Sensorsystem umfasst vorzugsweise mindestens drei Messebenen, wobei die Trajektoriedaten in mindestens zwei der Messebenen und die Geometriedaten in einer der Messebenen erfasst werden.

Bei einer bevorzugten Ausgestaltung der Erfindung umfasst das Sensorsystem fünf Messebenen, wobei zwei Messebenen in Fahrbahnrichtung geneigt zur Fahrbahn, eine Messebene vertikal und zwei Messebenen gegen die Fahrbahnrichtung geneigt zur Fahrbahn ausgerichtet sind. Hierbei können in der vertikal ausgerichteten Messebene die Geometriedaten erfasst werden. Diese Ausgestaltung ermöglicht die Front- und Heckerfassung der Fahrzeuge. Für Anwendungen, bei denen z. B. auf die Heckerfassung verzichtet werden soll, entfallen die beiden entsprechenden Messebenen, die in Fahrtrichtung ausgerichtet sind.

Generell kann je Messebene ein flächenüberwachender Sensor, wie zum Beispiel ein Lasermesssensor, eingesetzt werden.

Ferner können Bilder des Fahrzeugs, insbesondere zumindest des Nummernschildes und gegebenenfalls eines Übersichtsbildes des Fahrzeugs, nach dem Detektieren des Einfahrens eines Fahrzeugs in die erste Messebene erfasst werden, wobei die Bilder den Trajektoriedaten des Fahrzeugs zugeordnet werden.

Ferner kann vorgesehen sein, dass ein Datenaustausch von Kommunikationsdaten zwischen einer Kommunikationseinrichtung mit einer im Fahrzeug vorgesehenen Kommunikationseinheit durchgeführt wird und dass die Kommunikationsdaten den Trajektoriedaten des Fahrzeugs zugeordnet werden. Dies ist insbesondere bei der Überprüfung, ob Maut entrichtet wurde oder nicht, von besonderer Bedeutung. Dieses System kann jedoch ebenso für die Mauterhebung eingesetzt werden.

Generell besteht ein großer Vorteil des erfindungsgemäßen Verfahrens darin, dass zeitlich nacheinander erfasste und ermittelte Datensätze, z.B. Trajektoriedaten, Geometriedaten, Bilder und Kommunikationsdaten, zu einem gemeinsamen Datensatz zusammengeführt werden. Basis hierfür bilden die Trajektoriedaten, anhand derer abgeschätzt werden kann, welche zeitlich nacheinander ermittelten Datensätze einem Fahrzeug zuzuordnen sind. Darüber hinaus zeichnet sich das Verfahren durch eine hohe Flexibilität aus, da Daten unterschiedlicher Sensoren, die unabhängig voneinander Daten zu unterschiedlichen Zeitpunkten und an unterschiedlichen Orten erfassen, zu einer Durchfahrt fusioniert und einem Fahrzeug zugeordnet werden können. Weiterhin zeichnet sich das Verfahren durch eine hohe Fehlertoleranz aus, da Teile dieser Daten (z. B. aufgund von Verdeckungen im Straßenverkehr) fehlen können, ohne den Fusionsprozess zu behindern. Neben den genannten Sensoren für die Bilderfassung oder die Kommunikation sind auch weitere Sensoren, wie etwa redundante Kennzeichenlesessysteme oder Induktionsschleifen, etc., einsetzbar.

Ferner wird die Aufgabe durch eine Vorrichtung zum Erfassen der Geometrie und der Bewegung von Fahrzeugen gelöst, wobei die Vorrichtung zumindest ein flächenüberwachendes Sensorsystem, das die Entfernung einzelner Messpunkte in zumindest zwei Messebenen ermittelt, wobei die Messebenen eine Fahrbahn in Abstand zueinander quer zur Fahrbahnrichtung schneiden, und eine Recheneinheit, mittels derer durch Detektieren des Einfahrens eines Fahrzeugs in zumindest zwei der Messebenen und/oder des Ausfahrens des Fahrzeugs aus zumindest zwei der Messebenen die Fahrtrichtung und der Geschwindigkeit des Fahrzeugs ermittelt wird, umfaßt.

Das Sensorsystem weist vorzugsweise mindestens zwei flächenüberwachende Sensoren auf, die jeweils die Entfernung einzelner Messpunkte in einer Messebene ermitteln. Hierbei kann es sich bei den Sensoren um Lasermesssensoren in Form von LIDAR-Messsystemen handeln. Ein LIDAR-Messsystem ist ein Lasermesssystem, das Laserpulse aussendet und den reflektierten Laserstrahl detektiert und aus der Lichtlaufzeit des Laserpulses die Entfernung eines reflektierenden Objekts bestimmt. Hierbei wird ein Laserstrahl über einen schwenkbaren Spiegel abgelenkt, so dass mit dem Laserstrahl eine radial verlaufende Messfläche mit einem bestimmten Öffnungswinkel abgetastet wird. Bei anderen bekannten Systemen werden eine Vielzahl von stehenden Laserstrahlen verwendet, die eine radial verlaufende Messfläche mit einem bestimmten Öffnungswinkel aufspannen.

Das Sensorsystem kann derart ausgebildet sein, dass die Messebenen unterschiedlich zur Fahrbahn geneigt sind.

Vorzugsweise ist zumindest ein die Kontur von Fahrzeugen ermittelnder Sensor vorgesehen, wobei es sich bei diesem Sensor um einen oben beschriebenen Lasermesssensor handeln kann.

Bei einer bevorzugten Ausführungsform ist das Sensorsystem derart ausgebildet, dass zwei Messebenen in Fahrbahnrichtung geneigt zur Fahrbahn, eine Messebene vertikal und zwei Messebenen gegen die Fahrbahnrichtung geneigt zur Fahrbahn ausgerichtet sind. Hierbei kann in der vertikal ausgerichteten Messebene die Kontur von Fahrzeugen erfasst werden. Diese Ausführungsform ermöglicht die Front- und Heckerfassung der Fahrzeuge. Für Anwendungen, bei denen z. B. auf die Heckerfassung verzichtet werden soll, entfallen die beiden entsprechenden Messebenen, die in Fahrtrichtung ausgerichtet sind.

Ferner kann zumindest ein bildgebender Sensor, zum Beispiel eine Kamera, zum Erfassen eines Bildes des Fahrzeuges, insbesondere des Nummernschildes und gegebenenfalls eines Übersichtsbildes des Fahrzeuges, vorgesehen sein.

Der bildgebende Sensor ist vorzugsweise mit dem Sensorsystem derart gekoppelt, dass durch das Detektieren des Einfahrens eines Fahrzeugs in die erste Messebene der bildgebende Sensor ausgelöst wird und ein Bild aufgenommen wird.

Ferner kann eine Datenschnittstelle zu einer Kommunikationseinrichtung zur Datenkommunikation mit einer im Fahrzeug vorgesehenen Kommunikationseinheit vorgesehen sein. Des weiteren beinhaltet das System eine Datenschnittstelle zu einem übergeordneten Mauterhebungs- bzw. Mautkontroll-Managementsystem, an das die konsolidierten Durchfahrt-Daten weitergeleitet werden.

Die Vorrichtung kann mehrere Sensorsysteme umfassen, die quer zur Fahrbahnrichtung seitlich nebeneinander versetzt zueinander angeordnet sind, um eine Vielzahl von Fahrbahnen überwachen zu können.

Vorzugsweise ist das Sensorsystem auf einem Portal befestigt, dass die Fahrbahn quer zur Fahrtrichtung überspannt. An dem Portal sind sämtliche Sensoren des Sensorsystems befestigt. Somit wird lediglich ein einziges Portal (auch Gantry genannt) benötigt, um hintereinander angeordnete Messebenen zu bilden.
- Figur 1: eine schematische Seitenansicht einer erfindungsgemäßen Vorrichtung zum erfassen der Geometrie und der Bewegung von Fahrzeugen und
- Figur 2: eine schematische Draufsicht der Vorrichtung gemäß Figur 1.

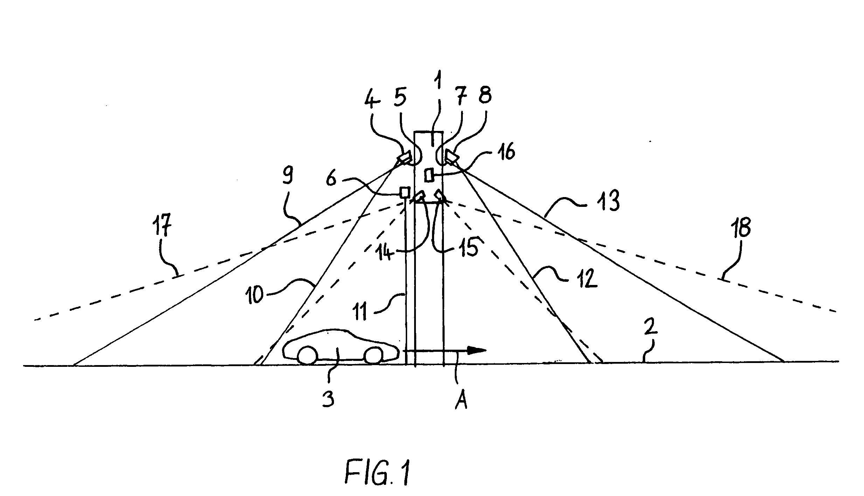

Die Figur 1 zeigt die erfindungsgemäße Vorrichtung zum Erfassen der Geometrie und der Bewegung von Fahrzeugen in einer schematischen Seitenansicht, welche ein Portal 1 beziehungsweise ein sogenanntes Gantry in Form einer eine Fahrbahn 2 überspannenden Brücke, an der mehrere Sensoren befestigt sind. Die Fahrbahn bildet eine Ebene, die senkrecht zur Bildebene angeordnet ist. Auf der Fahrbahn 2 bewegt sich ein Fahrzeug 3 in einer Fahrbahnrichtung A durch das Portal 1 hindurch.

Auf dem Portal 1 sind fünf Lasermeßsensoren 4, 5, 6, 7, 8 montiert. Die Lasermeßsensoren 4, 5, 6, 7, 8 sind als flächenüberwachende Lasersensoren ausgebildet, bei denen ein oder mehrere bewegbare Laserstrahlen oder mehrere fest stehende Laserstrahlen eine radial verlaufende Messfläche bilden und abtasten. Es kann sich um LIDAR-Messsysteme handeln, die Laserimpulse aussenden und den reflektierten Laserstrahl detektieren und aus der Lichtlaufzeit des Laserpulses die Entfernung eines reflektierenden Objekts bestimmen.

Hierbei bildet ein erster der Lasermesssensoren 5 eine erste Messebene 9, ein zweiter der Lasermesssensoren 4 eine zweite Messebene 10, ein dritter der Lasermesssensoren 6 eine dritte Messebene 11, ein vierter der Lasermesssensoren 8 eine vierte Messebene 12 und ein fünfter der Lasermesssensoren 7 eine fünfte Messebene 13. Alle Messebenen 9, 10, 11, 12, 13 sind quer zur Fahrtrichtung A angeordnet und sind jeweils in unterschiedlichen Winkeln zur Fahrbahn 2 beziehungsweise zu der Ebene, die durch die Fahrbahn 2 aufgespannt wird, angeordnet. Die erste Messebene 9 und die zweite Messebene 10 sind beide nach vorne in Richtung eines entgegenkommenden Fahrzeugs ausgerichtet und gegenüber der Fahrbahn 2 geneigt, wobei die erste Meßebene 9 weiter entfernt vom Portal 1 die Fahrbahn 2 schneidet als die zweite Messebene 10. Die dritte Messebene 11 ist in etwa vertikal zur Fahrbahn 2 angeordnet. Die vierte Messebene 12 und die fünfte Messebene 13 sind nach hinten in Fahrbahnrichtung A ausgerichtet und sind ebenfalls zur Fahrbahn 2 geneigt, wobei die vierte Messebene 12 die Fahrbahn 2 in einem geringeren Abstand zum Portal 1 schneidet als die fünfte Messebene 13. Zudem sind in Figur 1 alle Messebenen 9, 10, 11, 12, 13 in einem rechten Winkel zur Bildebene angeordnet.

Ein Fahrzeug 3, das nun in Figur 1 von links kommend das Portal 1 durchfährt wird zunächst vorne in die erste Meßebene 9 einfahren und dann nacheinander die zweite, dritte, vierte und fünfte Meßebene 10, 11, 12, 13 durchfahren. Im vorliegenden Fall ist das Fahrzeug 3 so klein, dass es zunächst in eine Messebene einfährt und aus dieser wieder ausfährt bevor es in die nächste Meßebene einfährt. Größere Fahrzeuge befinden sich in mehreren Messebenen gleichzeitig. Durch das Einfahren des Fahrzeugs 3 in die erste Meßebene 9 wird in einer Recheneinheit, die zum Beispiel im jeweiligen Lasermeßsensor 5 oder separat angeordnet ist, das Einfahren des Fahrzeugs 3 in die erste Meßebene 9 detektiert und erste Einfahrdaten generiert, die an eine (hier nicht dargstellte) zentrale Steuereinheit gesandt werden. Ferner werden beim Verlassen des Fahrzeugs 3 aus zum Beispiel der ersten Messebene 9 erste Ausfahrdaten generiert, die ebenfalls an die zentrale Steuereinheit gesandt werden. Aus den verschiedenen Einfahrdaten und Ausfahrdaten, die in den Meßebenen 9, 10, 11, 12, 13 ermittelt werden, kann die Position und die Geschwindigkeit des Fahrzeugs 3 abgeschätzt werden. Zudem wird die Position des Fahrzeugs 3 auch quer zur Fahrbahn 2 ermittelt, so dass auch die genaue Fahrtrichtung des Fahrzeugs 3 ermittelt werden kann. Diese Daten werden zu Trajektoriedaten des Fahrzeugs 3 zusammengefasst. Der dritte Lasersensor 6 dient entweder ausschließlich oder zusätzlich zur Erfassung der Kontur des Fahrzeugs 3. Aus diesem Grund ist die dritte Messebene 11 in etwa vertikal zur Fahrbahn 2 angeordnet, um möglichst genaue Geometriedaten des Fahrzeugs 3 ermitteln zu können. Aus der ermittelten Geschwindigkeit des Fahrzeugs 3 und den Geometriedaten läßt sich zudem auch die Länge des Fahrzeugs 3 bestimmen. Jedes Detektionsereigniss in jeder Messebene wird in die Trajektorienberechnung einbezogen, so dass diese Berechnung tolerant gegenüber dem Fehlen einzelner Ereignisse erfolgt.

Ferner sind an dem Portal 1 eine nach vorne gerichtete erste Kamera 14 und eine nach hinten gerichtete zweite Kamera 15 vorgesehen. Die erste Kamera 14 weist ein erstes Blickfeld 17 auf, das durch unterbrochene Linien angedeutet ist. Ebenso weist die zweite Kamera 15 ein zweites Blickfeld 18 auf, das ebenfalls durch unterbrochene Linien angedeutet ist. Die Kameras 14, 15 können zum Beispiel zum Erfassen des Nummernschildes eines Fahrzeugs 3 dienen. So kann zum Beispiel beim Einfahren des Fahrzeugs 3 in die erste Messebene 9 die erste Kamera 14 ausgelöst werden, um ein Bild des Fahrzeugs 3 zu speichern. Dieses Bild kann den übrigen Einfahrdaten und Ausfahrdaten zugeordnet werden. Aus diesem Bild kann außerdem das Kfz.-Kennzeichen automatisch ausgelesen und dem Datensatz zugeordnet werden.

Die zweite Kamera 15 dient dazu, zum Beispiel beim Einfahren oder Ausfahren in oder aus der fünften Messebene 13 ein Bild vom Heck des Fahrzeugs 3 zu speichern, um auch eine Rückansicht des Fahrzeugs 3 den Daten zuordnen zu können. Somit kann das Nummernschild am Heck des Fahrzeugs 3 zusätzlich erfasst werden.

Ferner sind am Portal 1 Kommunikationseinrichtungen 16 vorgesehen, die mit einer gegebenenfalls vorhandenen Kommunikationseinheit in einem Fahrzeug 3 kommunizieren können. Bei der Kommunikationseinheit im Fahrzeug kann es sich zum Beispiel um eine Onboard-Unit zur Mauterhebung bzw. Mautkontrolle handeln. Auch diese Kommunikatiuonsdaten werden den allgemein Trajektoriedaten zugeordnet.

Das System zeichnet sich durch eine hohe Flexibilität aus, da unterschiedliche Daten, die zu unterschiedlichen Zeitpunkten und an unterschiedlichen Orten erfasst werden, zu einem Datensatz zusammengefaßt werden können - selbst dann, wenn einzelne Daten unvollständig sind oder fehlen. Neben den erwähnten und gezeigten Sensoren können weitere Sensoren wie zum Beispiel ein redundantes Kennzeichenlesessystem oder Induktionsschleifen vorgesehen sein, deren Daten ebenfalls einem gemeinsamen Datensatz zugeführt werden.

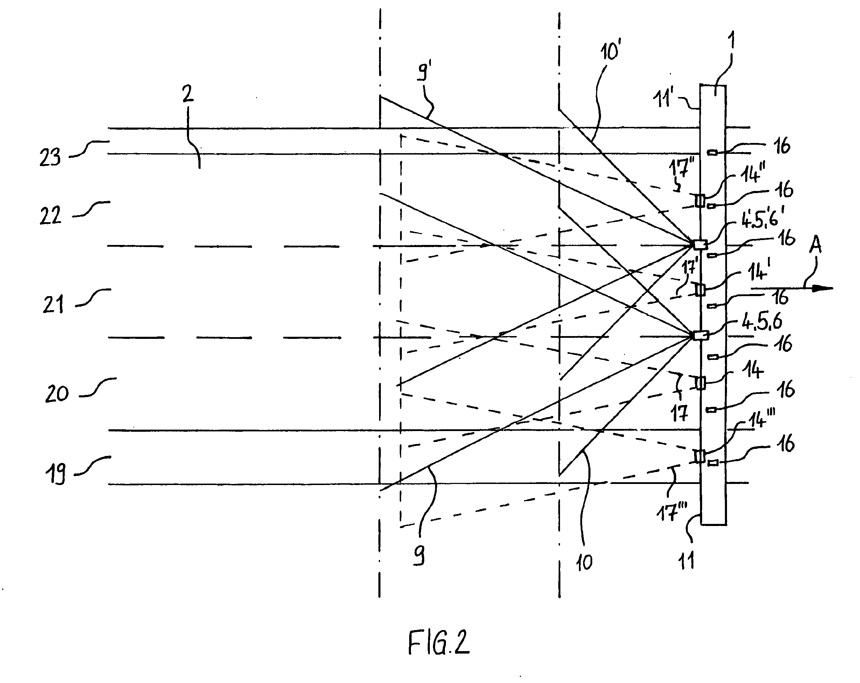

Figur 2 zeigt eine Draufsicht des Systems gemäß Figur 1 wobei die nach hinten gerichteten Sensoren der Übersichtlichkeit halber nicht dargestellt sind. Grundsätzlich ist jedoch auch anzumerken, dass verschiedene Anzahlen von Messebenen vorgesehen sein können. In einer vereinfachten Ausführungsform wäre daher ein System ohne die nach hinten gerichteten Sensoren, also genau so wie es in Figur 2 dargestellt ist, denkbar.

Ferner ist das Fahrzeug ebenfalls der Übersichtlichkeit halber nicht dargestellt. Die Fahrbahn 2 ist in einen Seitenstreifen 19, eine erste Spur 20, eine zweite Spur 21, eine dritte Spur 22 und in einen Mittelstreifen 23 aufgeteilt, die nebeneinander und in Fahrtrichtung A verlaufen.

Es ist zu erkennen, dass das in Figur 1 dargestellte Sensorsystem einen Teil der Fahrbahn abdeckt. Die Messebene 9, 10, 11 sind fächerförmig gestaltet, wobei die erste Messebene 9 den Seitenstreifen 19, die erste Spur 20, die zweite Spur 21 sowie teilweise die dritte Spur 22 abdeckt. Die zweite Messebene 10 überspannt ebenfalls zwei bis drei Fahrbahnen. Um alle Fahrbahnen abdecken zu können, ist ein zweites Messsystem mit weiteren Sensoren vorgesehen, wobei für diese Sensoren dieselben Bezugszeichen gewählt wurden. Somit läßt sich die gesamte Fahrbahnbreite 2 abdecken, wobei das Überlappen der einzelnen Meßebenen 9, 10, 11 zu einer Redundanz und einer größeren Sicherheit führt. Nach diesem Prinzip können beliebig viele Fahrbahnen durch modulares Hinzufügen weiterer Sensoren lückenlos erfasst werden.

### Bezugszeichenliste

- 1: Portal
- 2: Fahrbahn
- 3: Fahrzeug
- 4: erster Lasermesssensor
- 5: zweiter Lasermesssensor
- 6: dritter Lasermesssensor
- 7: vierter Lasermesssensor
- 8: fünfter Lasermesssensor
- 9: erste Messebene
- 10: zweite Messebene
- 11: dritte Messebene
- 12: vierte Messebene
- 13: fünfte Messebene
- 14: erste Kamera
- 15: zweite Kamera
- 16: Kommunikationseinrichtung
- 17: erstes Blickfeld
- 18: zweites Blickfeld
- 19: Seitenstreifen
- 20: erste Spur
- 21: zweite Spur
- 22: dritte Spur
- 23: Mittelstreifen

- A: Fahrbahnrichtung

## Patentansprüche

1. Verfahren zum Erfassen der Bewegung von Fahrzeugen (3) mittels eines flächenüberwachenden Sensorsystems, das die Entfernung einzelner Messpunkte in mindestens zwei Messebenen (9, 10, 11, 12, 13) ermittelt, wobei die Messebenen (9, 10, 11, 12, 13) eine Fahrbahn (2) in Abstand zueinander quer zur Fahrbahnrichtung (A) schneiden, wobei durch Detektieren des Einfahrens eines Fahrzeugs (3) in mindestens zwei der Messebenen (9, 10, 11, 12, 13) und/oder des Ausfahrens des Fahrzeugs (3) aus mindestens zwei der Messebenen (9, 10, 11, 12, 13) die Fahrtrichtung und die Geschwindigkeit des Fahrzeugs abgeschätzt wird und daraus Trajektoriedaten erzeugt werden.

2. Verfahren nach Anspruch 1,
**dadurch gekennzeichnet,**
**dass** das Einfahren eines Fahrzeugs (3) in eine erste Messebene (9) der mindestens zwei Messebenen und/oder das Ausfahren des Fahrzeugs (3) aus der ersten Messebene (9) mittels des flächenüberwachenden Sensorsystems detektiert wird,
**dass** das Einfahren des Fahrzeugs (3) in eine zweite Messebene (10) der mindestens zwei Messebenen und/oder das Ausfahren des Fahrzeugs (3) aus der zweiten Messebene (10) mittels des flächenüberwachenden Sensorsystems detektiert wird, und
**dass** die Fahrtrichtung und die Geschwindigkeit des Fahrzeugs (3) auf Basis der Messdaten aus den beiden Messebenen (9, 10) abgeschätzt wird.

3. Verfahren nach einem der Ansprüche 1 oder 2,
**dadurch gekennzeichnet,**
**dass** beim Detektieren des Einfahrens in eine der Messebenen (9, 10, 11, 12, 13) und/oder des Ausfahrens aus einer der Messebenen (9, 10, 11, 12, 13) der Zeitpunkt und der Ort des Einfahrens und/oder des Ausfahrens ermittelt werden, die als Basis für die Ermittlung Trajektoriedaten dienen.

4. Verfahren nach einem der Ansprüche 1 bis 3,
**dadurch gekennzeichnet,**
**dass** das Einfahren eines Fahrzeugs (3) in eine erste Messebene (9) der mindestens zwei Messebenen detektiert wird und erste Einfahrdaten an eine zentrale Steuereinheit gesendet werden,
**dass** das Verlassen des Fahrzeugs (3) aus der ersten Messebene (9) detektiert wird und erste Ausfahrdaten an die zentrale Steuereinheit gesendet werden, **dass** das Einfahren des Fahrzeugs (3) in eine zweite Messebene (10) der mindestens zwei Messebenen detektiert wird und zweite Einfahrdaten an eine zentrale Steuereinheit gesendet werden,
**dass** das Verlassen des Fahrzeugs (3) aus der zweiten Messebene (10) detektiert wird und zweite Ausfahrdaten an die zentrale Steuereinheit gesendet werden und
**dass** die Trajektoriedaten des Fahrzeugs (3) durch Abschätzen der Geschwindigkeit und der Fahrtrichtung des Fahrzeugs auf Basis der Einfahrdaten und Ausfahrdaten ermittelt werden.

5. Verfahren nach einem der Ansprüche 1 bis 4,
**dadurch gekennzeichnet,**
**dass** Geometriedaten des Fahrzeugs (3) in einer konturerfassenden Messebene (11) des Sensorsystems erfasst werden und
**dass** die Geometriedaten den Trajektoriedaten des Fahrzeugs (3) zugeordnet werden.

6. Verfahren nach Anspruch 5,
**dadurch gekennzeichnet,**
**dass** das Sensorsystem mindestens drei Messebenen (9, 10, 11, 12, 13) umfasst, wobei die Trajektoriedaten in mindestens zwei der Messebenen (9, 10, 11, 12, 13) und die Geometriedaten in mindestens einer der Messebenen (11) erfasst werden.

7. Verfahren nach Anspruch 5 oder 6,
**dadurch gekennzeichnet,**
**dass** eine der Messebenen (11) vertikal zur Fahrbahn (2) ausgerichtet ist, wobei mindestens in der vertikal ausgerichteten Messebene (11) die Geometriedaten erfasst werden.

8. Verfahren nach einem der Ansprüche 1 bis 7,
**dadurch gekennzeichnet,**
**dass** Bilder des Fahrzeugs (3), insbesondere des Nummernschildes des Fahrzeugs (3), erfasst werden und
**dass** die Bilder den Trajektoriedaten des Fahrzeugs zugeordnet werden.

9. Verfahren nach einem der Ansprüche 1 bis 8,
**dadurch gekennzeichnet,**
**dass** ein Datenaustausch von Kommunikationsdaten zwischen einer Kommunikationseinrichtung (16) mit einer im Fahrzeug (3) vorgesehenen Kommunikationseinheit durchgeführt wird und
**dass** die Kommunikationsdaten den Trajektoriedaten des Fahrzeugs (3) zugeordnet werden.

10. Vorrichtung zum Erfassen der Geometrie und der Bewegung von Fahrzeugen umfassend
zumindest ein flächenüberwachendes Sensorsystem, das die Entfernung einzelner Messpunkte in zumindest zwei Messebenen (9, 10, 11, 12, 13) ermitteln, wobei die Messebenen (9, 10, 11, 12, 13) eine Fahrbahn (2) in Abstand zueinander quer zur Fahrbahnrichtung (A) schneiden, sowie
eine Recheneinheit, mittels derer durch Detektieren des Einfahrens eines Fahrzeugs (3) in zumindest zwei der Messebenen (9, 10, 11, 12, 13) und/oder des Ausfahrens des Fahrzeugs aus zumindest zwei der Messebenen (9, 10, 11, 12, 13) die Fahrtrichtung und der Geschwindigkeit des Fahrzeugs ermittelt wird.

11. Vorrichtung nach Anspruch 10,
**dadurch gekennzeichnet,**
**dass** das Sensorsystem mindestens zwei flächen überwachende Sensoren (4, 5, 6, 7, 8) umfasst, die jeweils die Entfernung einzelner Messpunkte in einer Messebene ermitteln.

12. Vorrichtung nach einem der Ansprüche 10 oder 11,
**dadurch gekennzeichnet,**
**dass** das Sensorsystem derart ausgebildet ist, dass die Messebenen (9, 10, 11, 12, 13) unterschiedlich zur Fahrbahn (2) geneigt sind.

13. Vorrichtung nach einem der Ansprüche 10 bis 12,
**dadurch gekennzeichnet,**
**dass** zumindest ein die Kontur von Fahrzeugen (3) ermittelnder Sensor (6) vorgesehen ist.

14. Vorrichtung nach einem der Ansprüche 10 bis 13,
**dadurch gekennzeichnet,**
**dass** das Sensorsystem derart ausgebildet ist, dass zwei Messebenen (9, 10) in Fahrbahnrichtung geneigt zur Fahrbahn (2), eine Messebene (11) vertikal und zwei Messebenen (12, 13) gegen die Fahrbahnrichtung geneigt zur Fahrbahn ausgerichtet sind.

15. Vorrichtung nach einem der Ansprüche 10 bis 14,
**dadurch gekennzeichnet,**
**dass** mindestens ein bildgebender Sensor (14, 15) zum Erfassen eines Bildes des Fahrzeugs (3), insbesondere des Nummernschildes des Fahrzeugs (3), vorgesehen ist.

16. Vorrichtung nach Anspruch 15,
**dadurch gekennzeichnet,**
**dass** der bildgebende Sensor (14, 15) und das Sensorsystem derart miteinander gekoppelt sind, dass durch das Detektieren des Einfahrens eines Fahrzeugs (3) in die erste Messebene (9) der bildgebende Sensor (14, 15) ausgelöst wird.

17. Vorrichtung nach einem der Ansprüche 10 bis 16,
**dadurch gekennzeichnet,**
**dass** genau ein Portal (1) vorgesehen ist, das die Fahrbahn (2) quer zur Fahrbahnrichtung (A) überspannt und an dem das Sensorsystem über der Fahrbahn angeordnet ist.

## Claims

1. Method for determining the movement of vehicles (3) by means of a plane monitoring sensor system, which determines the distance of individual measuring points in at least two measuring planes (9, 10, 11, 12, 13), wherein the measuring planes (9, 10, 11, 12, 13) intersect a carriageway (2) with distance to each other transversally to the carriageway direction (A), wherein by means of detecting the entry of a vehicle (3) into at least two of the measuring planes (9, 10, 11, 12, 13) and/or the exit of the vehicle (3) from at least two of the measuring planes (9, 10, 11, 12, 13), the driving direction and the velocity of the vehicle are estimated and therefrom trajectory data are produced.

2. Method according to claim 1,
**characterised in**
**that** the entry of a vehicle (3) into a first measuring plane (9) of the at least two measuring planes and/or the exit of the vehicle (3) from the first measuring plane (9) is detected by means of the plane monitoring sensor system,
**that** the entry of the vehicle (3) into a second measuring plane (10) of the at least two measuring planes and/or the exit of the vehicle (3) from the second measuring plane (10) is detected by the plane monitoring sensor system, and that the driving direction and the velocity of the vehicle (3) are estimated on the basis of the measuring data from the two measuring planes (9, 10).

3. Method according to one of claims 1 or 2,
**characterised in**
**that** during the detection of the entry into one of the measuring planes (9, 10, 11, 12, 13) and/or the exit from one of the measuring planes (9, 10, 11, 12, 13), the point in time and the position of the entry and/or of the exit are determined, which serve as basis for the determination of the trajectory data.

4. Method according to one of claims 1 or 3,
**characterised in**
**that** the entry of a vehicle (3) into a first measuring plane (9) of the at least two measuring planes is detected and first entry data are transmitted to a central control unit,
**that** the exit of the vehicle (3) from the first measuring plane (9) is detected and first exit data are transmitted to the central control unit,
**that** the entry of a vehicle (3) into a second measuring plane (10) of the at least two measuring planes is detected and second entry data are transmitted to a central control unit,
**that** the exit of the vehicle (3) from the second measuring plane (10) is detected and second exit data are transmitted to the central control unit, and that the trajectory data of the vehicle (3) are determined by means of estimating the velocity and the driving direction of the vehicle on the basis of the entry data and exit data.

5. Method according to one of claims 1 or 4,
**characterised in**
**that** geometric data of the vehicle (3) are determined in a profile determining measuring plane (11) of the sensor system and
**that** the geometric data are assigned to the trajectory data of the vehicle (3).

6. Method according to claim 5,
**characterised in**
**that** the sensor system comprises at least three measuring planes (9, 10, 11, 12, 13), wherein the trajectory data are determined in at least two of the measuring planes (9, 10, 11, 12, 13) and the geometric data are determined in at least one of the measuring planes (11).

7. Method according to claim 5 or 6,
**characterised in**
**that** one of the measuring planes (11) extends vertically to the carriageway (2), wherein the geometric data are determined at least in the vertically arranged measuring plane (11).

8. Method according to one of claims 1 to 7,
**characterised in**
**that** pictures of the vehicle (3), especially of the license plate of the vehicle (3), are taken and
**that** the pictures are assigned to the trajectory data of the vehicle.

9. Method according to one of claims 1 to 8,
**characterised in**
**that** a data exchange of communication data takes place between a communication device (16) and a communication unit provided in the vehicle (3) and that the communication data are assigned to the trajectory data of the vehicle (3).

10. Device for determining the geometry and the movement of vehicles comprising
at least one plane monitoring sensor system, which determines the distance of individual measuring points in at least two measuring planes (9, 10, 11, 12, 13), wherein the measuring planes (9, 10, 11, 12, 13) intersect a carriageway (2) with distance to each other transversally to the carriageway direction (A), as well as
a central processing unit, by means of which the driving direction and the velocity of a vehicle are determined by detecting the entry of a vehicle (3) into at least two of the measuring planes (9, 10, 11, 12, 13) and/or the exit of the vehicle from at least two of the measuring planes (9, 10, 11, 12, 13).

11. Device according to claim 10,
**characterised in**
**that** the sensor system comprises at least two plane monitoring sensors (4, 5, 6, 7, 8), which, respectively, determine the distance of individual measuring points in a measuring plane.

12. Device according to one of claims 10 or 11,
**characterised in**
**that** the sensor system is formed such, that the measuring planes (9, 10, 11, 12, 13) are differently inclined to the carriageway (2).

13. Device according to one of claims 10 to 12,
**characterised in**
**that** at least one sensor (6), determining the profile of the vehicles (3), is provided.

14. Device according to one of claims 10 to 13,
**characterised in**
**that** the sensor system is formed such, that two measuring planes (9, 10) are arranged in carriageway direction inclined to the carriageway (2), one measuring plane (11) is arranged vertically and two measuring planes (12, 13) are arranged inclined against the carriageway direction inclined to the carriageway.

15. Device according to one of claims 10 to 14,
**characterised in**
**that** at least an image providing sensor (14, 15) for taking a picture of the vehicle (3), especially of the license plate of the vehicle (3), is provided.

16. Device according to claim 15,
**characterised in**
**that** the image providing sensor (14, 15) and the sensor system are coupled to each other such, that by means of detecting the entry of a vehicle (3) into the first measuring plane (9) the image providing sensor (14, 15) is activated.

17. Device according to one of claims 10 to 16,
**characterised in**
**that** exactly one gantry (1) is provided, which bridges the carriageway (2) transversally to the carriageway direction (A) and at which the sensor system is arranged above the carriageway.

## Revendications

1. Procédé de détection du mouvement de véhicules (3) au moyen d'un système de capteurs contrôlant les surfaces, qui détermine l'éloignement entre des points de mesure individuels dans au moins deux plans de mesure (9, 10, 11, 12, 13), dans lequel les plans de mesure (9, 10, 11, 12, 13) forment une intersection avec une voie routière (2) en espacement les uns par rapport aux autres transversalement à la direction de voie routière (A), dans lequel la direction de conduite et la vitesse du véhicule sont estimées en estimant le passage d'un véhicule (3) dans au moins deux des plans de mesure (9, 10, 11, 12, 13) et/ou la sortie du véhicule (3) hors d'au moins deux des plans de mesure (9, 10, 11, 12, 13) et d'après celles-ci des données de trajectoire sont générées.

2. Procédé selon la revendication 1, **caractérisé en ce que** le passage d'un véhicule (3) dans un premier plan de mesure (9) d'au moins deux plans de mesure et/ou la sortie du véhicule (3) hors du premier plan de mesure (9) est détecté au moyen du système de capteurs contrôlant les surfaces, **en ce que** le passage du véhicule (3) dans un deuxième plan de mesure (10) d'au moins deux plans de mesure et/ou la sortie du véhicule (3) hors du deuxième plan de mesure (10) est détectée au moyen du système de capteurs contrôlant les capteurs, et **en ce que** la direction de conduite et la vitesse du véhicule (3) sont estimées sur la base des valeurs de mesure provenant des deux plans de mesure (9, 10).

3. Procédé selon une des revendications 1 ou 2, **caractérisé en ce que** lors de la détection du passage dans un des plans de mesure (9, 10, 11, 12, 13) et/ou de la sortie hors d'un des plans de mesure (9, 10, 11, 12, 13), le moment et le lieu du passage et/ou de la sortie sont détectées, lesquels servent de base pour la détermination des données de trajectoire.

4. Procédé selon une des revendications 1 à 3, **caractérisé en ce que** le passage d'un véhicule (3) dans un premier plan de mesure (9) d'au moins deux plans de mesure est détecté et des premières données de passage sont envoyées à une unité de commande centrale, **en ce que** la sortie du véhicule (3) hors du premier plan de mesure (9) est détectée et des premières données de sortie sont envoyées à l'unité de commande centrale, **en ce que** le passage du véhicule (3) dans un deuxième plan de mesure (10) d'au moins deux plans de mesure est détecté et des deuxièmes données de passage sont envoyées à une unité de commande centrale, **en ce que** la sortie du véhicule (3) hors du deuxième plan de mesure (10) est détectée et des deuxièmes données de sortie sont envoyées à l'unité de commande centrale et **en ce que** les données de trajectoire du véhicule (3) sont déterminées en estimant la vitesse et la direction de conduite du véhicule sur la base des données de passage et des données de sortie.

5. Procédé selon une des revendications 1 à 4, **caractérisé en ce que** des données de géométrie du véhicule (3) sont détectées dans un plan de mesure (11) détectant les contours et les données de géométrie sont coordonnées aux données de trajectoire du véhicule (3).

6. Procédé selon la revendication 5, **caractérisé en ce que** le système de capteurs comprend au moins trois plans de mesure (9, 10, 11, 12, 13), dans lequel les données de trajectoire sont détectées dans au moins deux des niveaux de mesure (9, 10, 11, 12, 13) et les données de géométrie sont détectées dans au moins un des plans de mesure (11).

7. Procédé selon les revendications 5 ou 6, **caractérisé en ce que** un des plans de mesure (11) est aligné verticalement à la voie routière (2), dans lequel les données de géométrie sont détectées au moins dans le plan de mesure (11) aligné verticalement.

8. Procédé selon une des revendications 1 à 7, **caractérisé en ce que** des images du véhicule (3), notamment la plaque d'immatriculation du véhicule (3) sont détectées et **en ce que** les images sont coordonnées aux données de trajectoire du véhicule.

9. Procédé selon une des revendications 1 à 8, **caractérisé en ce que** un échange de données de communication est effectué entre un dispositif de communication (16) et une unité de communication prévue dans le véhicule (3) et **en ce que** les données de communication sont coordonnées aux données de trajectoire du véhicule (3).

10. Dispositif de détection de la géométrie et du mouvement de véhicules, comprenant au moins un système de capteurs contrôlant les surfaces, qui détermine l'éloignement de points de mesure individuels dans au moins deux plans de mesure (9, 10, 11, 12, 13), dans lequel les plans de mesure (9, 10, 11, 12, 13) forment une intersection avec une voie routière (2) en espacement les uns par rapport aux autres transversalement à la direction de voie routière (A) ainsi qu'une unité informatique, au moyen de laquelle la direction de conduite et la vitesse du véhicule sont déterminées en détectant le passage d'un véhicule (3) dans au moins deux des plans de mesure (9, 10, 11, 12, 13) et/ou la sortie du véhicule hors d'au moins deux des plans de mesure (9, 10, 11, 12, 13).

11. Procédé selon la revendication 10, **caractérisé en ce que** le système de capteurs comprend au moins deux capteurs (4, 5, 6, 7, 8) contrôlant les surfaces, qui déterminent respectivement l'éloignement entre des points de mesure individuels dans un plan de mesure.

12. Dispositif selon une des revendications 10 ou 11, **caractérisé en ce que** le système de capteurs est conçu de telle sorte que les plans de mesure (9, 10, 11, 12, 13) soient inclinés différemment par rapport à la voie routière (2).

13. Dispositif selon une des revendications 10 à 12, **caractérisé en ce que** au moins un capteur (6) déterminant les contours du véhicules (3) est prévu.

14. Dispositif selon une des revendications 10 à 13, **caractérisé en ce que** le système de capteurs est conçu de telle sorte que deux plans de mesure (9, 10) soient alignés dans la direction de conduite du véhicule en inclinaison par rapport à la voie de routière (2), un plan de mesure (11) verticalement et deux plans de mesure (12, 13) en inclinaison par rapport à la voie routière en sens contraire à la direction de conduite du véhicule.

15. Dispositif selon une des revendications 10 à 14, **caractérisé en ce que** au moins un capteur d'imagerie (14, 15) pour détecter une image du véhicule (3), notamment de la plaque d'immatriculation du véhicule (3), est prévu.

16. Dispositif selon la revendication 15, **caractérisé en ce que** le capteur d'imagerie (14, 15) et le système de capteurs sont couplés l'un à l'autre de telle sorte que le capteur d'imagerie (14, 15) soit détecté par la détection du passage d'un véhicule (3) dans le premier plan de mesure (9).

17. Dispositif selon une des revendications 10 à 16, **caractérisé en ce que** précisément un portique (1) est prévu, qui enjambe la voie routière (2) transversalement à la direction de voie routière (A) et sur lequel le système de capteurs est disposé au-dessus de la voie routière.
